# EUROPEAN PATENT APPLICATION

(11) **EP 2 453 651 A1**
(43) Date of publication of application: **16.05.2012**
(21) Application number: 11734347.5
(22) Date of filing: 12.01.2011
(51) Int. Cl.: H04N 7/24, H04N 21/235, H04N 21/435, H04N 21/854

(54) **METHOD, TERMINAL AND SERVER FOR PROCESSING GRAPHICS**

(30) Priority: 25.01.2010 CN 201010103245
(71) Applicant: Huawei Technologies Co., Ltd., Shenzhen, Guangdong 518129 (CN)
(72) Inventor: HUI, Yu, Guangdong 518129 (CN); ZHANG, Jie, Guangdong 518129 (CN); SHI, Teng, Guangdong 518129 (CN); YUE, Peiyu, Guangdong 518129 (CN); JIANG, Feihu, Guangdong 518129 (CN); WANG, Dawei, Guangdong 518129 (CN)
(74) Representative: Gleiter, Hermann
(86) International application number: PCT/CN2011/070200
(87) International publication number: WO 2011/088765

(57) **Abstract**

A method for processing graphics includes: receiving a graphic stream that carries a graphic type identifier; and obtaining the graphic type identifier, and displaying corresponding graphic content of the graphic stream if a graphic type is identifiable, or discarding the graphic stream if the graphic type is not identifiable. A terminal for processing graphics includes: a receiving unit, configured to receive a graphic stream that carries a graphic type identifier; an obtaining unit, configured to obtain the graphic type identifier; and a graphic processing unit, configured to display corresponding graphic content of the graphic stream if a graphic type is identifiable, or discard the graphic stream if the graphic type is not identifiable. Because the graphic stream carries a graphic type identifier, when obtaining the graphic type identifier, the terminal judges whether the graphic type is identifiable, and displays the graphic content if the graphic type is identifiable or discards the graphic stream if the graphic type is not identifiable. In this way, if the terminal does not support the graphic type, the terminal can discard the graphic stream automatically, which enhances the terminal capability of processing graphics.

## Description

This application claims priority to Chinese Patent Application No. 201010103245.9, filed with the Chinese Patent Office on January 25, 2010 and entitled "METHOD, TERMINAL, AND SERVER FOR PROCESSING GRAPHICS", which is incorporated herein by reference in its entirety.

### FIELD OF THE INVENTION

The present invention relates to the field of communications technologies, and in particular, to a graphic processing technology.

### BACKGROUND OF THE INVENTION

With the development of the digital broadcast television technology and integration of communications services, media is diversified. Media not only includes conventional audios and videos, but also includes texts, graphs, animations, and interactions with users. Value added services are provided for users through different forms of media. The value added services include film caption, title, extra information prompting, advertisement, and notification. A typical and ordinary scene is: when a user watches a video, a group of graphic advertisements appear on the lower side of the screen, and the user can click the desired advertisement graphic linked to a specific information source.

The Third Generation Partnership Project (3GPP) puts forward a Timed Text (Timed Text) technology. The Timed Text defines a text stream synchronized with the video stream, and the text stream is mainly used for presenting captions and descriptive texts. In the 3GPP, the Timed Text is a text displayed together with audios and videos on a terminal, and different text properties lead to different text effects. The properties include: area for displaying the text, font of the text, size of the text, text color, and text spacing. Both the text and the properties are stored in a text description structure in the form of a 3gp file.

Lately, the 3GPP puts forward a Timed Graphics (TG, Timed Graphics) work item, which provides another idea and scheme for displaying integrated content. The Timed Graphics work item aims to use a graphic stream parallel to a video stream to send additional graphic content to the terminal. The graphic content may be used to display a name label, a score box, or a match result graph.

In the prior art, graphics come in many types, and terminals have different capabilities of processing graphic information. Some terminals do not support the type of the graphic carried in the received video stream, and are incapable of parsing the graphic, which leads to processing disorder of the terminal or even crash of the terminal, and affects the user experience.

### SUMMARY OF THE INVENTION

Embodiments of the present invention provide a method, a terminal, and a server for processing graphics so that the terminal can process different graphics in a proper way.

A method for processing graphics includes: receiving a graphic stream that carries a graphic type identifier; and obtaining the graphic type identifier, and displaying corresponding graphic content of the graphic stream if a graphic type is identifiable, or discarding the graphic stream if the graphic type is not identifiable.

Another method for processing graphics includes: encapsulating graphic information in a multimedia file into a graphic stream that carries a graphic type identifier; and sending the graphic stream to a terminal so that the terminal processes the graphic stream according to the graphic type identifier.

A terminal for processing graphics includes: a receiving unit, configured to receive a graphic stream that carries a graphic type identifier; an obtaining unit, configured to obtain the graphic type identifier; and a graphic processing unit, configured to display corresponding graphic content of the graphic stream if a graphic type is identifiable, or discard the graphic stream if the graphic type is not identifiable.

A server for processing graphics includes: an encapsulating unit, configured to encapsulate graphic information in a multimedia file into a graphic stream that carries a graphic type identifier; and a sending unit, configured to send the graphic stream to a terminal so that the terminal processes the graphic stream according to the graphic type identifier.

Because the graphic stream carries a graphic type identifier, when the terminal obtains the graphic type identifier, the terminal judges whether the graphic type is identifiable, and displays the graphic content if the graphic type is identifiable or discards the graphic stream if the graphic type is not identifiable. In this way, if the terminal does not support the graphic type, the terminal can discard the graphic stream automatically, which enhances the terminal capability of processing graphics and improves the user experience.

### BRIEF DESCRIPTION OF THE DRAWINGS

To describe the technical solution of the present invention more clearly, the following outlines the accompanying drawings involved in the embodiments of the present invention. Apparently, the accompanying drawings outlined below are not exhaustive, and persons of ordinary skill in the art can derive other drawings from the accompanying drawings without any creative effort.
FIG. 1 is a flowchart of a method for processing graphics according to an embodiment of the present invention;
FIG 2 is a flowchart of another method for processing graphics according to an embodiment of the present invention;
FIG 3 is a schematic structure diagram of a 3gp file inclusive of a graphic track according to an embodiment of the present invention;
FIG 4 is a schematic structure diagram inclusive of a graphic sample according to an embodiment of the present invention;
FIG 5 is a schematic structure diagram of an RTP stream according to an embodiment of the present invention;
FIG. 6 is a method flowchart of a terminal processing a graphic stream according to an embodiment of the present invention;
FIG. 7 is a schematic structure diagram of a terminal for processing graphic streams according to an embodiment of the present invention; and
FIG. 8 is a schematic structure diagram of a server for processing graphic streams according to an embodiment of the present invention.

### DETAILED DESCRIPTION OF THE EMBODIMENTS

The technical solution of the present invention is hereinafter described in detail with reference to embodiments and accompanying drawings. Evidently, the embodiments are exemplary only and not exhaustive. All other embodiments, which can be derived by persons skilled in the art from the embodiments given herein without any creative effort, shall fall within the scope of the present invention.

In the process of encapsulating a graphic stream in the prior art, the server does not identify the graphic type in the graphic stream, and the terminal may be incapable of processing the graphic stream carried in a received multimedia file but keeps attempting to process the graphic stream, which deteriorates the processing capability of the terminal. The embodiments of the present invention provide a method and an apparatus for processing graphics. In this method, because the encapsulated graphic stream carries a graphic type identifier, when obtaining the graphic type identifier, the terminal judges whether the graphic type is identifiable, and discards the graphic stream if the graphic type is not identifiable. In this way, if the terminal does not support the graphic type, the terminal can discard the graphic stream automatically, which enhances the terminal capability of processing graphic streams and improves the user experience.

To make the technical solution of the present invention clearer to persons skilled in the art, the following describes the technical solution of the present invention in detail with reference to exemplary embodiments and accompanying drawings.

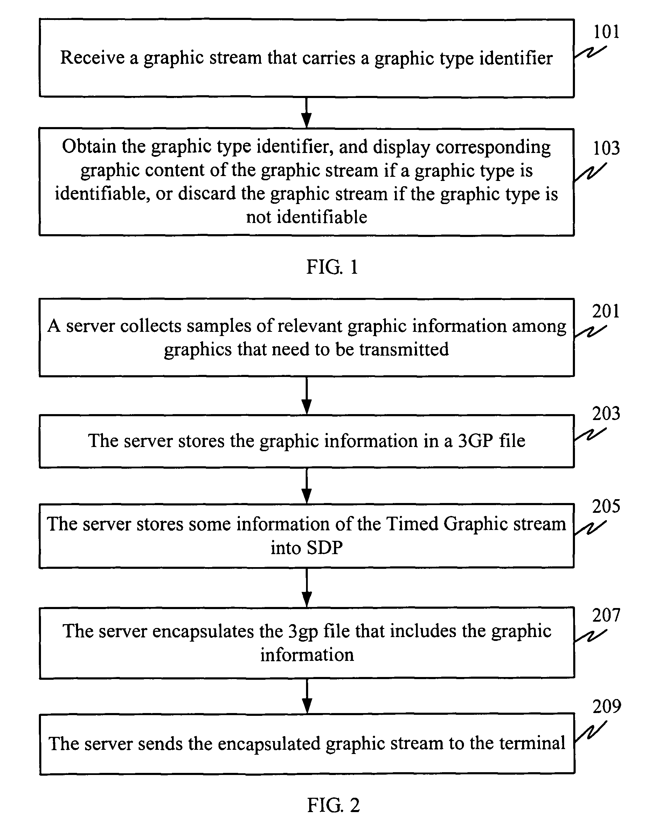

FIG 1 is a flowchart of a method for processing graphic information according to an embodiment of the present invention. The method includes the following steps:
101. Receive a graphic stream that carries a graphic type identifier.
103. Obtain the graphic type identifier, and display corresponding graphic content of the graphic stream if a graphic type is identifiable, or discard the graphic stream if the graphic type is not identifiable.

Because the graphic stream carries a graphic type identifier, when obtaining the graphic type identifier, the terminal judges whether the graphic type is identifiable, and displays the graphic content if the graphic type is identifiable or discards the graphic stream if the graphic type is not identifiable. In this way, if the terminal does not support the graphic type, the terminal can discard the graphic stream automatically, which enhances the terminal capability of processing graphics and improves the user experience.

FIG 2 is a flowchart of a method for processing graphic information according to an embodiment of the present invention. The method includes the following steps:
201. A server samples relevant graphic information among graphics that need to be transmitted.

The graphic information may include graphic content and graphic properties. Graphic properties include: graphic type, graphic position, graphic display effect, graphic style, graphic stroke style, Group of Pictures (GOP) information, graphic transformation effect, or graphic hyperlink, or any combination thereof. The graphic display effect may include: fading in/out, scrolling in/out, flying in/out, and graphic opacity; and the graphic transformation effect includes stretch, horizontal transformation, and rotation.

203. The server stores the graphic information and the graphic content into a 3gp file.

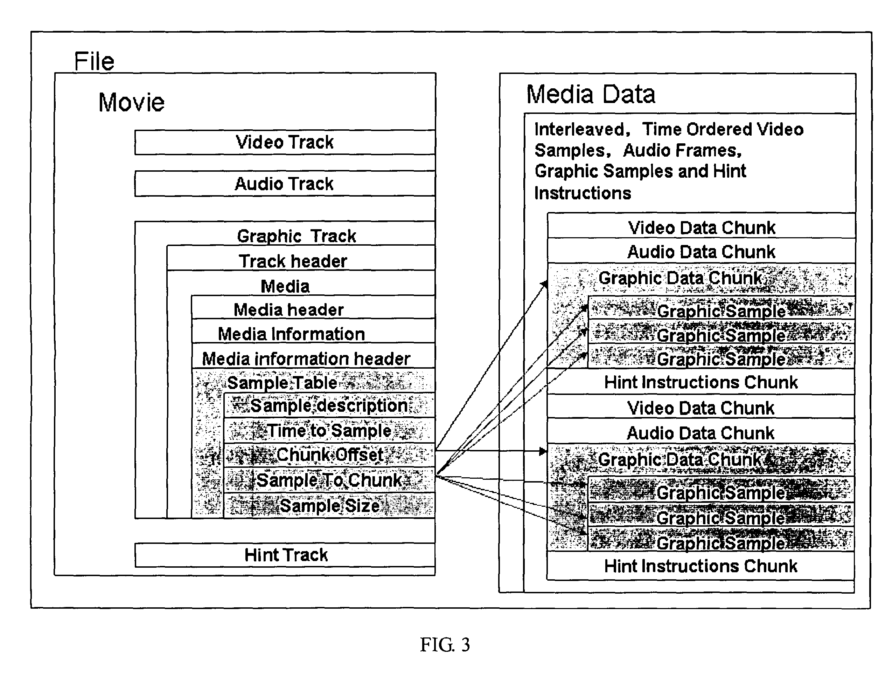

The 3gp file may store video data, audio data and extension data. The graphic information and the graphic content are stored in the extension data. Specifically, the graphic information is stored in the Timed Graphic of the extension data. As a type of extension data, the Timed Graphic adds several graphic description boxes in the 3gp file to describe the characteristics of the graphic. All information in the 3gp file is included in various boxes. Each file has only one movie box, and the movie box may include one or more tracks. Different media data is described with different track boxes. For example, video data is described with a video track, and audio data is described with an audio track. In this embodiment of the present invention, the Timed Graphic is described with a graphic track. As shown in FIG 3, the structure of a graphic track includes: track header, indicating the header of the track; media, which includes the media description corresponding to one track, each track box having unique media; media header, which is information independent of media codes, for example, time of creating the media and duration of the media; media information, whose child box gives properties of the media corresponding to the track; media information header, which includes four types of media information header boxes, with each type describing properties of specific media.

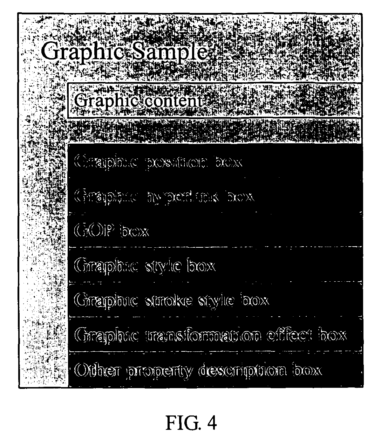

In a graphic track, the sample table includes time information and space information of all media samples in the graphic track. The child box of the sample table gives properties of a group of samples. As shown in FIG 4, the child box of the sample table is a sample description. In a 3gp file, the sample description includes different SampleEntries (not identified in FIG 2) to differentiate between different tracks. In the Timed Graphic data, SampleEntry is expressed as GraphicSampleEntry, and the GraphicSampleEntry may include various properties of the graphic. The following defines a structure of GraphicSampleEntry:

```
                class GraphicSampleEntry extends SampleEntry('grap') {
                     RegionBox default-region; //position where the graphic is initially
               displayed,
                     StyleRecord default-style; //initial display style of the graphic,
                StrokeRecord default-stroke; //initial stroke of the graphic,
                 }
```

The graphic position structure is defined below:

```
                class RegionBox{
                     signed int(16) tx; //x coordinate in the display region of the graphic
                     signed int(16) ty; //y coordinate in the display region of the graphic
                     signed int(16) width; //width of the graphic
                     signed int(16) height; //height of the graphic
                 unsigned int(16) layer; //layer of the graphic
                     }
```

The graphic style structure is defined below:

```
                 class StyleRecord {
                 unsigned int(16) picture-opacity; //opacity of the graphic
                 }
```

The graphic stroke structure is defined below:

```
                 class StrokeRecord{
                 unsigned int(16) stroke-width; //graphic stroke width
                 unsigned int(32) stroke-color; //graphic stroke color
                 }
```

Because the graphic itself comes in different types such as svg, png, jpeg, bmp or gif, a new box inherits the GraphicSampleEntry for each different graphic type, and the box carries the description about the graphic type additionally. For example, in an svg graphic, SVGGraphicSampleEntry means that the graphic type is inherited from GraphicSampleEntry, specifies that the box type is svg, and carries information about the version of the svg file. For example, the structure of the SVGGraphicSampleEntry is:

```
                 class SVGGraphicSampleEntry extends GraphicSampleEntry ('svg'){
                 unsigned int(32) Version;
                 }
```

In the 3gp file, the media information is stored in media data in the form of a sample. Such samples are called GraphicSamples. Each GraphicSample may store content of one graphic and information such as graphic property, GOP information, and graphic hyperlink.

As shown in FIG 4, a GraphicSample that stores the graphic property includes the following information:

Graphic position box: Position information indicates the coordinates of the graphic, width of the graphic, height of the graphic, and layer of the graphic. A layer is equivalent to adding one Z axis. When multiple graphics that overlap each other are displayed simultaneously, the value of the layer increases from 0 in ascending order, and specifies how to display the overlapping graphics. If the GraphicSampleEntry already stores the graphic position information, the graphic information is the initial graphic information, and the position information stored in the graphic sample is a result of change from the initial graphic information. It is the same with the graphic style, graphic stroke style, and transformation effect to be described below, namely, the GraphicSampleEntry stores the initial property information of the graphic, and the graphic sample may store the changed property information.

Graphic hyperlink box: The box exists only when the graphic has one or more links, and is null when the graphic has no link. This box may support one or more links of one graphic. If a graphic has multiple links, the region information needs to be bound to the link information; if the graphic has only one link, this box needs to describe the link information only.

GOP box: This box exists only when a dependence relationship, such as master and slave, needs to be defined between multiple graphics to be displayed on the terminal; and is null when only one graphic needs to be displayed on the terminal. This box supports the dependence relationship between multiple graphics, and can describe the level of a graphic in a GOP, so as to control the display order on the terminal.

Graphic style box: This box expresses the properties such as opacity of the graphic.

Graphic stroke style box: This box indicates the width and color of the graphic stroke.

Graphic transformation effect box: This box indicates the horizontal and vertical stretch spaces, and the rotation angle of the graphic.

In an embodiment, the GraphicSample in a 3gp file is defined below:

```
                Class GraphicSample {
                    unsigned int(16) picture-length; //length of graphic content
                    unsigned int(8) picContent[picture-length]; //graphic content
                    GraphicSampleModifierBox Graphic-modifier[]; //parent class of a graphic
              description box
                }
```

The box for describing the graphic link information is defined below:

```
                class GraphicHyperBox () extends GraphicSampleModifierBox ('href) {
                Area linkarea; //a link area in the graphic, where the whole graphic
          corresponds to a link, and the value is -I
                    unsigned int(8) URLLength; //graphic link length
                    unsigned int(8) URL[URLLength]; //graphic link information
                    unsigned int(8) altLength; //length of the text prompt of the link
                    unsigned int(8) altstring[altLength]; //text prompt of the link
                }
```

The GOP structure is defined below:

```
                class GraphicDependencyBox() extends GraphicSampleModifierBox ('depd') {
                    unsigned int(16) picture-groupld; //GOP information
                     Unsigned int(8) picture-level; //graphic level
                }
```

The picture-groupld gathers the correlated graphics as a GOP, and the picture-level has two values: 0 indicating a master graphic, and 1 indicating a slave graphic.

The example above describes the properties of a graphic hyperlink and the definition structure of a GOP. It is the same with definitions of other property structures in the graphic sample.

It should be noted that, a graphic has many types of properties, and the example above describes how to store the graphic properties in a 3gp file; other properties of the graphic may be stored in the 3gp file in the same way.

According to the description about Graph icSampleEntry and GraphicSample above, the graphic information sampled by the server can be stored.

205. When a graphic stream needs to be transmitted, a Session Description Protocol (SDP) is generally used to notify information about the Timed Graphic stream to the terminal. The following describes how to express a Timed Graphic stream in SDP:
m=video <port number> RTP/<RTP profile> <dynamic payload type>
a=rtpmap:<payload type> 3GPP-tg/1000

In the description above, the media type in row M is video; the code name of a=rtpmap is 3GPP-tg; and the dynamic payload type corresponds to the payload type (PT) of the RTP header.

207. When a graphic stream needs to be transmitted, the server needs to encapsulate the Timed Graphic.

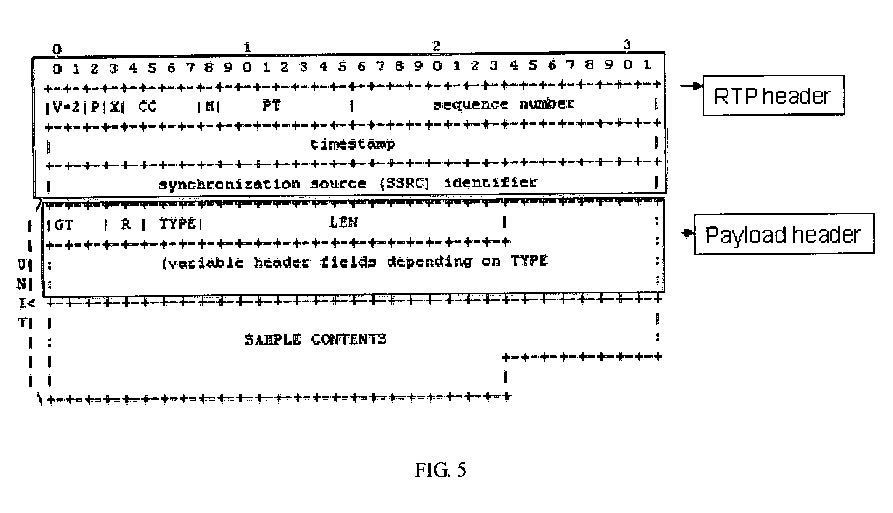

The Timed Graphic stream is carried over RTP (namely, encapsulated in an RTP packet), and transmitted independently of the video content. When the Timed Graphic is transmitted over RTP, an RTP packet may include one or more complete samples, or fragments of the sample, or sample description. As shown in FIG 5, an RTP packet includes an RTP header, a payload header, and a payload.

The meanings of fields in the RTP header are described below:
M: When the RTP header carries one or several complete samples, or the last fragment of a sample, this field is set to 1; otherwise, this field is set to 0.
PT: This field defines the transmission bearer type of the RTP stream; for the Timed Graphic, this field is set dynamically, and its value is the same as the value of the payload type carried over SDP.

For definitions of other fields, see the RTP specifications.

It should be noted that, in an RTP packet that includes multiple GraphicSamples, each sample has its payload header, and the graphic type of each sample is expressed through the GT in the corresponding payload header.
R: Reserved field.
Type: In the payload of an RTP packet, the Type value decides the content in the payload; when the payload carries a complete GraphicSample, the Type value is TYPE 1.
TYPE 1: a complete GraphicSample
TYPE 2: fragment of a GraphicSample (carrying no graphic property description box)
TYPE 3: all graphic property description boxes in a GraphicSample, or the first one of the graphic property description boxes
TYPE 4: any one of the graphic property description boxes except the first one
TYPE 5: a sample description
TYPE 0, 6, and 7: reserved
LEN: bearer length
SIDX: index of GraphicSampleEntry; property when the value of Type is TYPE I
SDUX: display time information, indicating the display time interval in this RTP timestamp unit; property when the value of Type is TYPE I
GLEN: length of graphic content, indicating the start position of a graphic description box in a GraphicSample; property when the value of Type is TYPE 1.

When the Type is set to other values, GT is set to 0, and the terminal can ignore the GT.

Payload: The payload carries a complete sample, or fragments of a sample, or a sample description, depending on the type of the payload header field.

Unlike texts, graphics come in many types. Different types of graphics are processed through different mechanisms on the terminal. The program for processing the corresponding type of graphic is installed on the terminal beforehand. Therefore, the Timed Graphic describes the graphic type in the payload header to facilitate processing on the terminal.

209: The server sends the encapsulated graphic stream to the terminal.

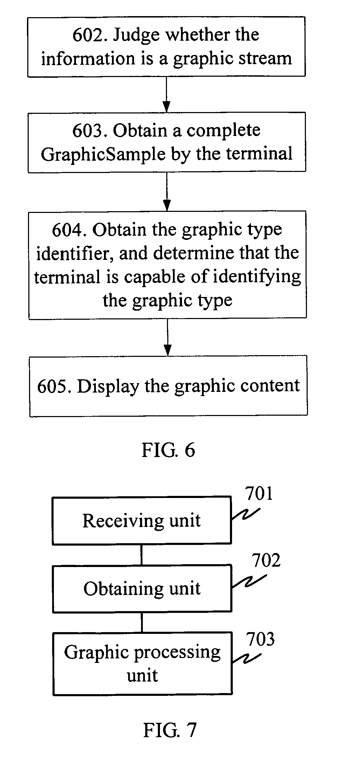

The graphic stream is encapsulated into an RTP packet and transmitted independently of the video content. After receiving the Timed Graphic stream, the terminal processes the graphic structure carried in the stream and displays the graphic. As shown in FIG 6, the processing procedure of the terminal includes the following steps:
601. The terminal receives an RTP packet and parses the RTP packet header.

Because the graphic stream is encapsulated in an RTP packet and transmitted independently of the video content, the terminal parses the RTP packet header after receiving the RTP packet.

602: The terminal judges whether the payload type carried in the packet header is the same as the payload type of the Timed Graphic described in SDP; if so, the terminal judges whether the RTP packet is a Timed Graphic stream; if the RTP packet is not a Timed Graphic stream, the terminal ends the procedure; if the RTP packet is a Timed Graphic stream, the terminal proceeds to step 603.

603. The terminal parses the payload units in the RTP packet one by one. One payload unit may be a complete sample, or fragments of a sample, or content of the sample description.

The terminal parses each payload header, and judges the payload type according to the Type value carried in the payload header. If the Type value is Type5, it indicates that the payload unit carries a sample description, and the sample description includes initial properties of a series of graphics, and, in this case, the terminal buffers the initial properties of the graphics; otherwise, the terminal goes on processing. The terminal judges the Type value in the parsed payload unit. If the Type value is Type1, it indicates that the payload unit carries a complete GraphicSample; if the Type value in the payload unit is Type2, it indicates that the payload unit carries a GraphicSample fragment, and, in this case, the terminal needs to go on obtaining information about the whole GraphicSample, and repeat step 603.

604. After obtaining information about the whole GraphicSample, the terminal parses the payload header, and obtains the graphic type carried in the payload header and expressed by GT. If the graphic type is identifiable to the terminal, the terminal goes on processing the information; if the graphic type expressed by GT is not identifiable, the terminal discards this media stream.

605. The terminal decapsulates the buffered data to obtain the graphic content and the description property of the graphic. The terminal parses the graphic content according to the GT, and parses the display property of the graphic according to the graphic property description box.

The terminal finds the corresponding SampleDescription in the buffered information according to the SIDX carried in the payload header, and decapsulates the SampleDescription according to the GraphicSample structure and the GraphicSampleEntry structure respectively to obtain the graphic content and the graphic description. The terminal determines the graphic display position according to the initial graphic position description box defined in the SampleEntry, and displays the graphic in the display position. If the GraphicSample defines the GOP property, the terminal judges whether the graphic is a master graphic or slave graphic according to the GOP description box defined in the GraphicSample, and displays the graphic directly if the graphic is a master graphic. If the graphic is a slave graphic, the terminal queries a display state corresponding to the master graphic in the graphic relationship table, and displays the slave graphic normally if the master graphic is displayed normally, or gives up displaying the slave graphic if the master graphic is not displayed normally. If the GraphicSample defines a hyperlink property, the terminal obtains the hyperlink information of the graphic according to the hyperlink box in the GraphicSample. The user can access the content linked to this hyperlink in the process of interactions. The terminal may also display its property according to other properties.

Because the graphic stream carries a graphic type identifier, when obtaining the graphic type identifier, the terminal judges whether the graphic type is identifiable, and displays the graphic content if the graphic type is identifiable or discards the graphic stream if the graphic type is not identifiable. In this way, if the terminal does not support the graphic type, the terminal can discard the graphic stream automatically, which enhances the terminal capability of processing graphics and improves the user experience.

FIG 7 shows a terminal for processing graphics according to an embodiment of the present invention. The terminal includes:
a receiving unit 701, configured to receive a graphic stream that carries a graphic type identifier;
an obtaining unit 702, configured to obtain the graphic type identifier; and
a graphic processing unit 703, configured to display corresponding graphic content of the graphic stream if a graphic type is identifiable, or discard the graphic stream if the graphic type is not identifiable.

It should be noted that, in the terminal for processing graphics described above, the division of the functional modules is only an example. In practice, depending on the requirements such as hardware configuration requirements or software implementation convenience, the foregoing functions may be implemented by different functional modules, namely, the internal structure of the terminal for processing graphics is divided into different functional modules to undertake all or part of the functions described above. In practice, the corresponding functional modules may be corresponding hardware or corresponding software executed by the hardware. For example, the receiving unit 701 may be hardware that executes the foregoing functions, such as a receiver with the receiving module or a universal receiving apparatus capable of the storage function, or may be a general receiving device capable of executing the corresponding computer programs to implement the foregoing functions, or other hardware devices.

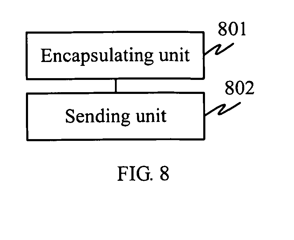

FIG. 8 shows a server for processing graphics according to an embodiment of the present invention. The server includes:
an encapsulating unit 801, configured to encapsulate graphic information in a multimedia file into a graphic stream that carries a graphic type identifier; and
a sending unit 802, configured to send the graphic stream to a terminal so that the terminal processes the graphic stream according to the graphic type identifier.

It should be noted that, in the server for processing graphics described above, the division of the functional modules is only an example. In practice, depending on the requirements such as hardware configuration requirements or software implementation convenience, the foregoing functions may be implemented by different functional modules, namely, the internal structure of the server for processing graphics is divided into different functional modules to undertake all or part of the functions described above. In practice, the corresponding functional modules may be corresponding hardware or corresponding software executed by the hardware. For example, the sending unit 802 may be hardware that executes the foregoing functions, such as a sender capable of the specific sending function or a universal sending apparatus capable of the foregoing functions, or may be a general sending device capable of executing the corresponding computer programs to implement the foregoing functions, or other hardware devices.

After reading the foregoing embodiments, persons skilled in the art are clearly aware that the embodiments of the present invention may be implemented through hardware, or, preferably in most circumstances, through software in addition to a necessary universal hardware platform. Therefore, all or part of the contributions made by the technical solution of the present invention to the prior art may be embodied in a software product capable of executing the foregoing method procedure. The software product may be stored in storage media such as a Read Only Memory or Random Access Memory (ROM/RAM), a magnetic disk, or a Compact Disk-Read Only Memory (CD-ROM), and incorporates several instructions for instructing a computer device (for example, a personal computer, a server, or a network device) to execute the method specified in any embodiment of the present invention or part of the embodiment.

Although the present invention has been described through several exemplary embodiments, the present invention is not limited to such embodiments. It is apparent that persons skilled in the art can make modifications and variations to the present invention without departing from the spirit and scope of the present invention. The present invention is intended to cover the modifications and variations provided that they fall within the scope of protection defined by the following claims or their equivalents.

## Claims

1. A method for processing graphics, comprising:
receiving a graphic stream that carries a graphic type identifier; and
obtaining the graphic type identifier, and displaying corresponding graphic content of the graphic stream if a graphic type is identifiable, or discarding the graphic stream if the graphic type is not identifiable.

2. The method according to claim 1, wherein:
the graphic stream further comprises Group of Pictures (GOP) information, and the GOP information is dependence relationships between graphics in the GOP; and
accordingly, the step of displaying the graphic content comprises:
judging whether the graphic is a master graphic or slave graphic according to the GOP information, and displaying content of the master graphic directly if the graphic is a master graphic; if the graphic is a slave graphic, judging whether the master graphic corresponding to the slave graphic is displayed normally, and displaying content of the slave graphic if the corresponding master graphic is displayed normally.

3. The method according to claim 1, wherein:
the graphic stream further comprises graphic transformation effect information, and the graphic transformation effect information comprises horizontal stretch space of graphics, vertical stretch space of graphics, and/or rotation angle of graphics; and
accordingly, the step of displaying the graphic content comprises:
displaying content of the graphics with transformation effects according to the graphic transformation effect information.

4. The method according to claim 1, wherein:
the graphic stream further comprises graphic position information, and the graphic position information indicates a position of displaying the graphic content; and
accordingly, the step of displaying the graphic content comprises:
displaying the graphic content in the position indicated by the graphic position information.

5. The method according to claim 1, wherein:
the graphic stream further comprises graphic hyperlink information, and the graphic hyperlink information comprises information about one or more regions and corresponding hyperlink information; and
accordingly, the step of displaying the graphic content comprises:
displaying corresponding hyperlinks in the one or more regions according to the information about the one or more regions and the corresponding hyperlink information.

6. The method according to claim 1, wherein:
the step of obtaining the graphic type identifier comprises: after obtaining a complete graphic sample, obtaining the graphic type identifier carried in a payload header field of the graphic stream.

7. A method for processing graphics, comprising:
encapsulating graphic information in a multimedia file into a graphic stream that carries a graphic type identifier; and
sending the graphic stream to a terminal so that the terminal processes the graphic stream according to the graphic type identifier.

8. The method according to claim 7, wherein:
the graphic information further comprises Group of Pictures (GOP) information, graphic position information, graphic hyperlink information, or graphic transformation effect information, or any combination thereof; and
the method further comprises: storing the graphic information in extension data of the multimedia file.

9. A terminal for processing graphics, comprising:
a receiving unit, configured to receive a graphic stream that carries a graphic type identifier;
an obtaining unit, configured to obtain the graphic type identifier; and
a graphic processing unit, configured to display corresponding graphic content of the graphic stream if a graphic type is identifiable, or discard the graphic stream if the graphic type is not identifiable.

10. A server for processing graphics, comprising:
an encapsulating unit, configured to encapsulate graphic information in a multimedia file into a graphic stream that carries a graphic type identifier; and
a sending unit, configured to send the graphic stream to a terminal so that the terminal processes the graphic stream according to the graphic type identifier.
